# EUROPEAN PATENT SPECIFICATION

(11) **EP 4 086 615 B1**
(45) Date of publication and mention of the grant of the patent: **27.03.2024**
(21) Application number: 21172790.4
(22) Date of filing: 07.05.2021
(51) Int. Cl.: G01N 23/205, G01N 1/40

(54) **METHOD AND A SYSTEM FOR EXAMINING SAMPLE PARTICLES BY X-RAY RADIATION**
VERFAHREN UND SYSTEM ZUR UNTERSUCHUNG VON PROBENPARTIKELN MITTELS RÖNTGENSTRAHLUNG
PROCÉDÉ ET SYSTÈME D'EXAMEN DE PARTICULES D'ÉCHANTILLONS PAR RAYONS X

(43) Date of publication of application: 09.11.2022
(73) Proprietor: Deutsches Elektronen-Synchrotron DESY, 22607 Hamburg (DE); Technische Universität Hamburg, 21073 Hamburg (DE)
(72) Inventor: Chapman, Henry N., 22607 Hamburg (DE); Bajt, Sasa, 22607 Hamburg (DE); Awel, Salah, 22607 Hamburg (DE); Trieu, Hoc Khiem, 21073 Hamburg (DE); Bohne, Sven, 21073 Hamburg (DE); Ebrahimifard, Reza, 22607 Hamburg (DE)
(74) Representative: Bird & Bird LLP - Hamburg

(56) References cited:
- WO-A1-2017/006093
- US-A1- 2006 177 940
- US-A1- 2009 108 190
- US-A1- 2016 341 675
- US-A1- 2020 141 886
- US-A1- 2020 363 348
- US-B2- 10 436 780

## Description

The invention relates to a method and a system for examining sample particles by X-ray radiation.

Serial femtosecond crystallography (SFX) known from the prior art uses intense and short pulses of X-rays from a free-electron laser to record many snapshot diffraction patterns of particles, in particular protein crystals, that flow across the X-ray beam generated by an X-ray source. Serial femtosecond crystallography was developed primarily to overcome the issue of radiation damage that may occur in conventional particle crystallography using X-ray tubes or synchrotron radiation, for example. The exposure to the X-ray beam modifies the structure under investigation, requiring a relative large structure size of the particles, in particular large crystals, which are often difficult to grow, and cryogenic temperatures, which may also modify the structure from the physiologically relevant one. The short pulses of the X-ray free-electron laser (XFELs) are detected and the resulting structural information gained before destruction of the particle under X-ray exposure takes place, allowing much greater exposures, and hence much smaller particles which do not need to be cryogenically cooled. However, the particle is completely vaporized after the X-ray exposure, so measurements must be carried out repeatedly, each time with a fresh particle. One way to accomplish that is to flow a slurry comprising many distributed particles in a liquid jet across the X-ray beam. However, the duty cycle of the X-ray pulses is low when comparing the duration of pulses to the duration between pulses. Therefore, to increase the chance of the X-ray pulses intercept the randomly arriving particles at the interaction region, high concentration of particle must be injected, resulting in a low sample delivery efficiency (the fraction of injected particle intercepted by the X-ray pulses). In the contrary, a high concentration of particles distributed in the fluid often leads to clogging of the capillary used to deliver the particles into the X-ray beam. In practice, low concentration of samples must be injected, resulting a low hit fraction (the fraction of X-ray intercepting a particle). Therefore, measurements must be carried out over a longer period of time to collect enough diffraction patterns from particles.

Prior art relevant to the present invention is disclosed in US 2020/363348 A1 and in US 2020/141886 A1, both describing system for analysis of droplets containing proteins.

The object of the present invention is to provide a method and a system, which allow an efficient examination of particles distributed in a fluid by X-ray radiation.

According to a first aspect of the present invention, the object is solved by the method according to claim 1. The method comprises the following steps:
a) Generating a flow of a sample fluid along a fluid path in a transport direction, wherein sample particles are distributed in the sample fluid;
b) Exposing the sample fluid flowing through a first application section of the fluid path to a first laser light generated by a first laser light source for a first holding time period such that a first optical light pressure is applied on sample particles entering the first application section resulting in a bunch of sample particles, which is released at the end of the first holding time period;
c) Repeating step b) preferably at a regular interval such that the fluid flow of the sample fluid leaving the first application section carries a first sequence of spaced bunches of sample particles;
d) Exposing the sample fluid flowing through a detection section of the fluid path downstream to the first application section to an X-ray set of at least one X-ray pulse generated by an X-ray source;
e) Repeating step d) to form a second sequence of spaced X-ray sets such that each of the spaced X-ray sets partly or fully intersects a different bunch of the bunches of sample particles carried by the sample fluid flowing through the detection section; and
f) Detecting by means of an X-ray detector an X-ray radiation formed by the X-ray pulses of the second sequence of spaced X-ray set modified by the bunches of sample particles in step e).

The method addresses the low efficiency explained in the introduction by bunching particles with optical laser light in the flow of the sample fluid so that each resulting bunch of particles is to arrive at the detection section where the respective bunch of particles is more likely exposed to the set of at least one X-ray pulse. Exposing bunches of particles to the X-ray radiation significantly increases the efficiency when using the method for examining the particles.

The particles are preferably formed by crystals, in particular protein crystals. The flow of the sample fluid may also be referred to as a fluid flow and the particles may also be referred to as sample particles, or vice versa. The fluid flow is generated according to the step a) in a fluid path in a transport direction, wherein sample particles are distributed in the sample fluid. At least at a starting point of the fluid path, the sample particles are preferably evenly distributed, preferably homogeneously distributed in the sample fluid. The sample fluid may be formed by a liquid. The fluid flow may be generated by a fluid pump or another means, which is configured to generate the fluid flow. At least a part of the fluid path may be determined by a tube, in particular a capillary. The transport direction is preferably the direction from an input end of the capillary to an output end of the capillary. Thus, the transport direction is preferably the direction in which the fluid is transported. Preferably, the fluid flow generated in step a) is a continuous fluid flow. The speed of the flow of the sample fluid is preferably less than 1 mm/s.

If the sample fluid entering the capillary would be delivered unchanged to the detection section of the fluid path, the same problem as explained in the introduction would occur. Against this background, it is the preferred underlying idea of the invention to optically trap the particles upstream of the detection section and hold particles for a certain time frame against the liquid flow and thereafter to release the resulting bunch of particles into the flow. As a result, the concentration of a particles per unit volume in the resulting bunch is higher than the concentration of particles in the fluid as entering into fluid path. The optical trap is preferably caused in step b).

According to step b) of the method, the sample fluid flowing through a first application section of the fluid path is exposed to a first laser light generated by a first laser light source for a first holding time period. Preferably, the first laser light is exposed to the sample fluid in the first application section of the fluid path in a direction perpendicular to the transport direction. The first laser light source is preferably a pulsed laser light source, which is preferably configured to generate pulsed laser light as the first laser light to which the sample fluid in the first application section of the fluid path is exposed. The first laser light may also be generated by a continuous wave light source that can be configured to generate pulsed first laser light. The first laser light source may comprise a single laser light generation unit or at last two laser light generation units, wherein the preferred features, preferred technical effects and/or advantages of the first laser light source apply in an analogous manner for each of the at least one laser light generation unit of the first laser light source. The first laser light may have a wavelength of 970 nm and power of 0,9 W. Preferably, the first laser light is emitted into the fluid in the first application section, while the fluid is flowing through the first application section. Further preferably, the first laser light may be formed by pulsed laser light or continuous laser light. The first laser light causes an optical thermophoretic force and/or a radiation pressure on the particles being in the first application section of the fluid path. The thermophoretic force and/or a radiation pressure may also be referred to as the first optical light pressure, which is applied on the particles entering the first application section. Preferably, the first optical light pressure maybe formed by a pulsed first optical light pressure or by a continuous first optical light pressure, depending on the first laser light. As a result, the particles entering the first application section will be subject to a first optical trap caused by the first laser light. As a further result, the first laser light holds the particles entering the first application section within the first application section against the fluid flow. Since the fluid flow maintains to transport further particles into the first application section during the first holding period, the number of particles in the first application section, which the first laser light holds during the first holding period, increases. The particles, which the first laser light holds during the first holding period in the first application section, are preferably forming the resulting bunch of particles in step b). Since the first laser light is exposed to the first application section in step b) only during the first holding time period, the first laser light is turned off at the end of the first holding time period. As a result, the bunch of particles is released to the fluid flow at the end of the first holding time. It has been found during practical experiences, that a bunch of particles does not lead to a clogging of a capillary, in which the fluid flow is guided. As a result of the bunching the initial concentration of particles in the fluid entering the fluid path can be reduced, which reduces the number of particles that have to be prepared. The reduced number of particles saves cost and preparation time. Furthermore, it has been found, that reducing the initial concentration of particles also reduces the chances for clogging, which also saves time by avoiding interruptions.

To receive as much information as possible with regard to the diffraction pattern of the particles when being exposed to X-ray radiation, is desired to repeat step b), such that a bunch of particles is released at the end of the first holding time period of each step b) resulting in a first sequence of spaced bunches of sample particles. This first sequence of spaced bunches of particles is therefore created downstream of the first application section of the fluid path. The fluid flow downstream of the first application section therefore carries the first sequence of spaced bunches of sample particles.

The technical effect of repeating step b) according to step c) is to locally concentrate the particles into bunches that are spaced in time and/or spaced in the transport direction. Thus, the concentration of particles in each bunch is higher than the concentration of particles in fluid when the fluid path. When a bunch with the increased concentration of particles is exposed to a set of X-ray pulses, there is a higher chance that the X-ray pulses will hit the particles, so that the efficiency for examining the particles increases significantly. Consequently, the method according to the present inventions ensures an efficient examination of the particles or at least supports the efficient examination of the particles.

Repeating step b) according to step c) may cause first light pattern, in which on-periods alternate with off-periods. Each on-period may be defined by the first holding period of step b), during which the first laser light is emitted into the sample fluid flowing through the first application section. The first laser light may be turned off during each off-period. The sum of a single on-period and a single off-period may define the space in time between two subsequent bunches in the first sequence of spaced bunches. The sum of a single on-period and a single off-period may also define indirectly the distance as the space in transport direction between two subsequent bunches of the first sequence of spaced bunches. Thus, the space in time and/or the distance may represent the space between each two subsequent bunches in the first sequence of the spaced bunches.

The first laser light generated by the first laser light source may be guided by at least one optical fiber to the first application section through which the sample fluid is flowing. For example, two optical fibers may be used to guide the first laser light from the first laser light source to the first application section, such that the ends of the optical fibers, where the first laser light is outputted, are arranged to opposite lateral sides of the first application section, such that the sample fluid flowing through the first application section is exposed to the first laser light emitted into the first application section. If the first laser light source comprises only a single laser light generation unit, the first laser light source may also comprise a splitter, which is configured to split the laser light generated by the single laser light generation unit into the two optical fibers. But if the first laser light source comprises for instance two laser light generation units, then each laser light unit is assigned a separate optical fiber (of the two optical fibers) into which the respective laser light unit feeds the generated laser light. If the fluid flow is guided by a capillary, the at least one optical fiber end may be arranged on a lateral outside of the capillary, through which the first laser light is transmitted into the first application section of the fluid path defined by the capillary. If two optical fibers are used to guide the first laser light, both respective ends of the optical fibers may be arranged on opposite lateral outside positions of the capillary, such that the first laser light is transmitted into the first application section from opposite sides. A wall of the capillary may be at least partly transparent for the first laser light.

Another embodiment to guide the first laser light from the first laser light source to the first application section may be formed by a glass microchip, which may comprise a first optical guiding unit, which is configured to guide the first laser lights from the first laser light sources to the first application section. The microchip may also be configured to form at least a part of the capillary.

According to another embodiment, the optical fibers may be replaced e.g. by direct written 3D wave guides and/or the capillary may be replaced by direct written 3D shaped microfluidic channels. Both, the fibers and the capillary may be part of the same glass microchip. All parts may be fabricated by Femtosecond laser induced chemical etching (FLICE) simultaneously.

According to step d) of the method, the fluid flowing through a detection section of the fluid path downstream to the first application section is exposed to an X-ray set of at least one X-ray pulse generated by an X-ray source. The X-ray set may also be referred to as a set. In principle, the X-ray set of at least one X-ray pulse may be a single X-ray pulse. In this example, each X-ray set may be formed by a single X-ray pulse. However, in a preferred embodiment, the X-ray set of at least one X-ray pulse is formed by a plurality of X-ray pulses. In this case, the X-ray set may also be referred to as an X-ray burst. Further preferably, the X-ray set may be formed by at least 1000 X-ray pulses. Each X-ray pulse may have a duration of some femtoseconds. Preferably, each X-ray pulse is emitted into the detection section of the fluid path in a direction perpendicular to the transport direction. Further preferably, the X-ray source is a free electron laser.

The X-ray pulses of each X-ray set are spaced in time. The time of each X-ray set during which the at least one X-ray pulse of the X-ray set is generated is preferably less than 1 ms. Therefore, the end of the first holding period, when a bunch of particles is released to the fluid flow, is preferably synchronized to match an arrival time of the respective bunch at the detection section of the fluid path, such that the respective bunch of particles are exposed to an X-ray set generated in step d). Preferably, the end of the first holding time period is synchronized to match the arrival time, such that each pulse of the X-ray set is intersecting the bunch of particles.

As explained in connection with step c), the first sequence of spaced bunches of particles is carried by the fluid flow downstream of the first application section. The first sequence of spaced bunches may subsequently arrive at the detection section of the fluid path. The bunches of the first sequence may therefore sequentially enter the detection section. In order expose the sequentially entering bunches with X-ray radiation for examining purpose, step d) is repeated according to step e) to form a second sequence of spaced X-ray sets. The second sequence of spaced X-ray sets is preferably to be understood as a sequence of X-ray sets being spaced in time. Each X-ray set is caused according to step d). Furthermore, the second sequence of spaced X-ray sets is formed according to step e), such that each of the spaced X-ray sets either partly or fully intersects a different bunch of the bunches carried by the fluid flowing through the detection section. Therefore, each of the spaced X-ray sets may either partly or fully intersects a different bunch of the first sequence of spaced bunches, which is released to the fluid flow downstream of the first application section and sequentially entering the detection section. However, as will be become apparent from another embodiment of the present invention that the first sequence of spaced bunches may be subject to a second laser light resulting in a further concentration of the particles of each bunch. The resulting third sequence of spaced bunches may alternatively arrive at the detection section, such that the bunches of this third sequence are sequentially entering the detection section and being subsequently exposed to the X-ray pulses of the X-ray sets.

Depending on the speed of the fluid flow in the transport direction and/or depending on the length of the first holding time period, the X-ray sets of the second sequence of the spaced X-ray sets may partly or fully intersect every N-th bunch of particles entering the detection section of the fluid path. For instance, N may be a number of between 2 and 100. However, it may also be possible that step d) is repeated according to step e), such that each bunch of particles entering the detection section is exposure to the X-ray pulses of a different X-ray set.

If an X-ray pulse intersects a particle, this X-ray pulse will be modified. This modification may include an absorption of the X-ray pulse by the particle, a deflection of the X-ray pulse by the particle, a time delay of the X-ray pulse resulting from a transmission through the particle or a phase shift of the X-ray pulse resulting from the transmission through the particle.

According to step f) of the method, an X-ray radiation, which is formed of by the X-ray pulses of the second sequence of spaced X-ray sets being modified by the bunches of the particles in step e), is detected by means of an X-ray detector. Preferably, the X-ray detector is arranged opposite to the side of the detection section where the X-ray pulses of the X-ray sets are emitted into the detection section of the fluid path.

Since each X-ray set is exposed to a different bunch according to step e), the detector will detect a separate modified X-ray set for each of the X-ray sets emitted by the X-ray source. As a result, the X-ray radiation detected in step f) may be formed by a third sequence of modified X-ray sets, which are spaced in time and wherein each modified X-ray set comprises at least one modified X-ray pulse. The at least one modified X-ray pulse of a modified X-ray set may represent a diffraction pattern of at least one particle of the bunch, which modified the respective at least one X-ray pulse of the modified X-ray set. Therefore, the detector may be configured to create a detection signal, which represents directly or indirectly of the diffraction pattern of the particles of the bunches of particles, which modified the X-ray sets of step e).

Furthermore, the X-ray radiation detected according to step f) may be understood as at least a part of an examination of sample particles carried by the fluid flow through the detection section.

As can already be derived from the context of the preceding explanations, steps a) to f) are not to be understood in such a way that the steps a) to f) are to be executed sequentially in the alphabetic order one after the other. Rather, it is intended, for example, that step a) is executed in parallel during all steps b) to f). Steps b) and c) may be understood as a group of steps, because step b) is repeatedly executed in accordance with step c). The same applies to steps d) and e), which may be understood as a further group of steps because step d) is executed repeatedly in accordance with step e). The two groups of steps can also be executed in parallel at least for a certain time. This may occur, for example, if the distance between the first application section and the detection section is small. In this case, step b) can still be repeated while the repetition of step d) has already starting but not finished.

According to a preferred embodiment of the method, the first laser light is configured to concentrate the sample particles of a bunch in the transport direction and/or in a cross direction being perpendicular to the transport direction. As an effect, the concentration of particles in each bunch is higher than the concentration of particles in fluid when the fluid path. The configuration of the first laser light may refer to a predefined frequency spectrum of the first laser light. For example, the first laser light may be generated by a pulsed laser light source, such that the first laser light is configured as a pulsed laser light. The first laser light may also be generated by a continuous wave light source that can be configured to generate pulsed first laser light. The configuration of the first laser light may additionally or alternatively refer to the angle of incident with respect to the transport direction, such that the first laser light is exposed in the respective angle of incident into the first application section. For example, the angle of incident may be configured such that the first laser light concentrates the sample particles of a bunch in the transport direction and/or in the cross direction being perpendicular to the transport direction. The angle of incidence may be set between 70 degree and 110 degree, preferably 90 degree.

According to a further preferred embodiment of the method, the X-ray source and/or the first laser light source is/are controlled by a control unit such that the first sequence of spaced bunches resulting from step c) is synchronized to the second sequence of spaced X-ray sets resulting from step e). As an effect, each of the X-ray sets can efficiently be modified by particles of the bunches. For example, the control unit may control the X-ray source, the first laser source or even both, such that the end of the first holding period, when a bunch of particles is released to the fluid flow, is synchronized to match an arrival time of the respective bunch at the detection section of the fluid path, such that the respective bunch of particles intersect an X-ray set generated in step d). Preferably, the end of the first holding time period is synchronized by the control unit to match the arrival time, such that each pulse of the X-ray set is intersecting the bunch of particles.

According to a further preferred embodiment of the method, step b) is repeated according to step c) with the same cycle frequency as step d) is repeated according to step e). The same frequency allows to generate only one X-ray set for each bunch of particle, and vice versa. The total quantity of particles required can be kept particularly small, making the method especially efficient. The repetition of step d) according to step e) may be time-shifted and/or phase-shifted with respect to the repetition of step b) according to step c). The time/phase-shift may depend on the distance between the first application section and the detection section and the sample flow speed.

According to a further preferred embodiment of the method, the first holding periods are spaced in time such that each bunch of sample particles is fully or at least partly intersected by the X-ray set repeatedly generated according to step e). It has been found that the maximum frequency with which step d) can be repeated according to step e) may be limited in a practice. The resulting maximum frequency may therefore indirectly define the space in time between the bunches in the sequence of bunches such that each bunch of the sequence of bunches entering the detection section is exposed to a separate X-ray set. This also allows to keep the total quantity of required particles small, making the method especially efficient. According to an example of the preferred embodiment, each bunch is released in step b) such that each bunch meets an arrival time of the at least one X-ray pulse of the corresponding X-ray set.

According to a further preferred embodiment of the method, a frequency of repeating step d) according to step e) is between 5 and 20 per second, preferably 10 per second. Preferably, between 1000 and 5000 X-ray pulses are generated by the X-ray source for each X-ray set. Further preferably, the exposure time of the X-ray set during each step d) is between 0,1 ms and 2 ms, further preferably less than 1 ms.

According to a further preferred embodiment of the method, an initial concentration of sample particles in the sample fluid entering the first application section is less than 10^10 (10¹⁰) particles per ml of the sample fluid. Preferably, the initial concentration is between 10^8 and 10^10 particles per ml of the sample fluid.

According to a further preferred embodiment of the method, the first laser light is configured such that a first concentration of the sample particles of each bunch in the sample fluid leaving the first application section is at least 20 times higher than the initial concentration. The higher the first concentration is, the higher is the probability that each of the X-ray pulses of an X-ray set will intersect one of the particles of a bunch when being exposed to the respective X-ray set. This will increase the efficiency of the method.

According to a further preferred embodiment of the method, the fluid flow leaving the first application section flows downstream into a second application section of the fluid path and thereafter downstream into the detection section of the fluid path, wherein the method comprises the following further steps g) and h), which are performed between step c) and d):
g) Exposing the sample fluid flowing through the second application section to a second laser light generated by a second laser light source for a second holding time period such that a second optical light pressure is applied on the sample particles of a bunch of sample particles entering the second application section resulting in a higher density of the sample particles of the respective bunch, which is released at the end of the second holding time period; and
h) Synchronously repeating step g) in accordance with step c) such that the flow of the sample fluid leaving the second application section carries a third sequence of spaced bunches of densified sample particles.

In principle, step g) is analogous to step b). For step g), reference is therefore made to the preferred embodiments, preferred features, effects and/or advantages in an analogous manner as already explained in connection with step b). However, step g) differs from step b) in that the second laser light acts on the particles of a bunch that already comprises a quantity of particles being concentrated in the bunch. This concentrated quantity of particles is further concentrated into a smaller volume by means of the second laser light. In addition, the second laser light may act in step g) on particles that are not already associated with the bunch, but nevertheless enter the second application section by the fluid flow, so that these further particles are additionally associated and/or concentrated with the bunch. Both of the previously explained effects contribute to the concentration of particles per unit volume in the bunch being further increased by step g).

In principle, step h) is analogous to step c). For step h), reference is therefore made to the preferred embodiments, preferred features, effects and/or advantages in an analogous manner as already explained in connection with step c). However, step h) differs from step c) in that step g) is synchronously repeated in accordance with step c). As an effect, the time interval and/or the distance in the transport direction from bunch to bunch in the first sequence of bunches is maintained for the third sequence of bunches. The repetition of step g) according to step h) may be time-shifted and/or phase-shifted with respect to the repetition of step b) according to step c). The time/phase-shift may depend on the distance between the first application section and the second application section.

The third sequence may correspond to the first sequence but with the difference, that the particles in the bunches of the third sequence are arranged with a higher concentration per unit volume. The concentration per unit volume may also be referred to as the density. Provided that the first sequence of bunches is synchronized with the repetition of step d) according to step e), it follows that the third sequence of bunches may also be synchronized accordingly. Preferably, the bunches of the third sequence are sequentially exposed to the repeated X-ray sets according to step e).

According to a preferred embodiment of the method, the second laser light is configured to concentrate the sample particles of a bunch in the transport direction and/or in a cross direction being perpendicular to the transport direction. The configuration of the second laser light may refer to a predefined frequency spectrum of the second laser light. For example, the second laser light may be generated by a pulsed laser light source, such that the second laser light is configured as a pulsed laser light. The second laser light may also be generated by a continuous wave light source that can be configured to generate pulsed second laser light. The second laser light source may comprise a single laser light generation unit or at last two laser light generation units, wherein the preferred features, preferred technical effects and/or advantages of the second laser light source apply in an analogous manner for each of the at least one laser light generation unit of the second laser light source. The configuration of the second laser light may additionally or alternatively refer to the angle of incident with respect to the transport direction, such that the second laser light is exposed in the respective angle of incident into the second application section. For example, the angle of incident may be configured such that the second laser light concentrates the sample particles of a bunch in the transport direction and/or in the cross direction being perpendicular to the transport direction. The angle of incidence may be set between 70 degree and 110 degree, preferably 90 degree.

According to a further preferred embodiment of the method, the first laser light source and/or the second laser light source is/are controlled by the control unit such that the third sequence of spaced bunches resulting from step h) is synchronized to the first sequence of spaced bunches resulting from step e). As an effect, each of the X-ray sets can efficiently be modified by particles of the bunches of the third sequence resulting in modified X-ray sets which can be used for examining sample particles by X-ray radiation. For example, the control unit may control the second laser source, such that the end of the second holding period, when a bunch of particles is released from the second application section to the fluid flow, is synchronized to match an arrival time of the respective bunch at the detection section of the fluid path, such that a X-ray set generated in step d) by the X-ray source is exposed to the respective bunch of particles. Preferably, the end of the second holding time period is synchronized by the control unit to match the arrival time, such that each pulse of the X-ray set is exposed to the bunch of densified particles.

According to a further preferred embodiment of the method, the second laser light is configured such that a second concentration of the sample particles of each bunch in the sample fluid leaving the second application section is at least 50 times higher than the first concentration. The higher the second concentration is, the higher is the probability that each of the X-ray pulses of an X-ray set will intersect one of the particles of a bunch when entering the detection section. This will increase the efficiency of the method.

According to a further preferred embodiment of the method, the X-ray detector is configured such that the detected X-ray radiation represents diffraction pattern of sample particles of the bunch, which modified the at least one X-ray pulse of the respective X-ray set. The diffraction pattern may be the structure of the particles. The detected X-ray radiation may therefore be regarded as the result of an examination of the sample particles.

According to a further preferred embodiment of the method, the method comprises the following further steps i) and j):
i) Exposing the sample fluid (4) flowing through a third application section of the fluid path (6) to a reference acoustic wave generated by an acoustic wave generator for a third holding time period such that an acoustic pressure, which results in a further concentration of a bunch of sample particles or in a pre-bunch of sample particles entering the third application section; and
j) Synchronously repeating step i) in accordance with step c).

When referring to the acoustic wave, this preferably means a predetermined acoustic spectrum of acoustic waves.

According to a further preferred embodiment, the third application section is upstream to the first application section. In this case, the particles entering the third application section are concentrated by the acoustic pressure to pre-bunches. The concentration of particles in each pre-bunch is higher than the initial concentration of particles in the sample fluid upstream of the third application section, for instance when entering a capillary. Furthermore, step j) is adapted such that step i) is repeated in accordance with step c) such that the flow of sample fluid leaving the third application section carries a fourth sequence of spaces pre-bunches of sample particles. The flow of sample fluid subsequently carries each pre-bunch into the first application section, where the particles of the pre-bunch, which entered the first application section at a time, and preferably further particles entering the first application section are concentrated through the first optical light pressure to the resulting bunch of particles.

According to a further preferred embodiment, the third application section is arranged downstream to the first application section. A sequence of bunches of particles is leaving the first application section and subsequently entering sequentially the third application section. Each bunch of particles entering the third application section is further concentrated by the acoustic pressure. Preferably, the repetition of step i) is synchronized with the repetition of step b), such that a bunch of particles leaving the first application section remains to be a bunch of particles after entering the third application section. The bunch of the particles is further concentrated within the third application section. The bunch of particles is released after the third holding time period. Consequently, a sequence of bunches, which is referred to as the fourth sequence, is a carried by the flow of sample fluid downstream to the third application section. The flow of sample fluid carries the fourth sequence of bunches of the particles to the second application section. The bunches will sequentially enter the second application section. Each bunch entering the second application section is exposed to the second laser light to further concentrate the particles of the respective bunch. In this context, reference is made to the previous explanations. In other words, the third application section may be arranged between the first application section and of the second application section.

According to a further preferred embodiment, the third application section is the same as the first application section. As a result, particles entering the first application section (corresponding to the third application section) with the flow of the sample liquid are simultaneously exposed to the reference acoustic wave and the first laser light. Consequently, the associated technical effects on the concentration of the particles in the resulting bunch of particles are superimposed. Preferably, steps b) and i) are synchronized in such a way that the respective holding time periods are of the same length and/or ends at the same time. The bunches released into the flow of the sample fluid therefore each have a higher concentration of particles.

Previously, it is explained that the third application section may be arranged upstream of the first application section, downstream of the first application section, or overlapping with the first application section. However, the third application section may be arranged in an analogous manner with the second application section. For example, the third application section may be arranged upstream of the second application section, downstream of the second application section, or overlapping with the second application section. In this context, reference is made to the preceding explanations, preferred features, technical effects and/or advantages in an analogous manner.

According to a second aspect of the present invention, the object of the present invention is also solved by a method comprising the following steps:
- exposing, at an X-ray interaction section, the sample fluid to X-rays emitted by an X-ray source in a first pattern including on-periods and off-periods; and
- exposing, at a laser interaction section located upstream of the X-ray interaction portion, the sample fluid to laser radiation emitted by a laser source in a second pattern including on-periods and off-periods such that bunches of particles are formed which are spaced along the extension of a capillary, such that the proportion of particles irradiated by the X-rays is increased.

For the method according to the second aspect of the present invention, reference is made to the explanations, preferred embodiments, preferred features, effects and/or advantages in an analogous manner as already outlined before in connection with the method according to the first aspect of the present invention.

According to a third aspect of the present invention, the object of the present invention is also solved by a system according to claim 13. The system comprises a first laser light source, an X-ray source, an X-ray detector and preferably a second laser light source and preferably a control unit, wherein the system is configured to carry out the method according to the first aspect of the present invention and/or any of the corresponding preferred embodiment. For the system, reference is made to the preferred embodiments, preferred features, effects and advantages in an analogous manner as previously explained in connection with the method according to the first aspect of the invention.

According to a preferred embodiment of the system, the system comprises a hollow capillary, which is configured to guide the sample fluid along the fluid pathway in the transport direction, and wherein the capillary is configured to transmit the first laser light at least through a first ring section of the capillary forming the first application section of the fluid pathway. Preferably, the capillary is configured to transmit the second laser light at least through a second ring section of the capillary forming the second application section of the fluid pathway.

According to a further preferred embodiment of the system, the capillary ends in a nozzle, which is configured to release the flow of sample fluid as a fluid jet, and wherein the X-ray source is arranged such that the X-ray set of the at least one X-ray pulse generated in step d) is exposed to the fluid jet. The X-ray detector may be arranged on the opposite side of the side of the detection section where the X-ray pulses of the X-ray sets are emitted into the detection section of the fluid jet. The fluid jet preferably forms a part of the fluid path.

Further features, advantages and application possibilities of the present invention may be derived from the following description of exemplary embodiments and/or the figures.

Furthermore, in the figures, same reference signs may indicate same or similar objects.
- Fig. 1: schematically illustrates a first embodiment of the system.
- Fig. 2: schematically illustrates a second embodiment of the system.
- Fig. 3: schematically illustrates an embodiment of a microchip.
- Fig. 4: schematically illustrates a part of a capillary with attached light guides.

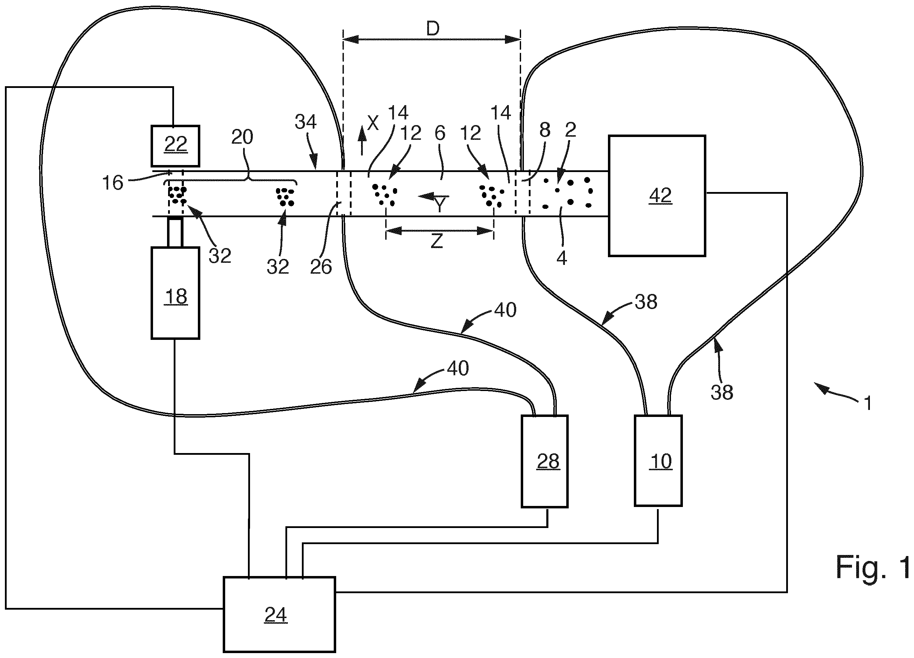

Figure 1 schematically illustrates a first embodiment of the system 1. The system 1 comprises at least a first laser light source 10, an X-ray source 18 and an X-ray detector 22. The system 1 is configured to carry out the steps of the method according to claim 1.

The system 1 is configured to carry out step a) of the method and therefore to generate a flow of the sample fluid 4 along a fluid path 6 in a transport direction Y, wherein sample particles 2 are distributed in the sample fluid 4. For this purpose, the system 1 preferably comprises a pump unit 42, which is configured to pump the sample fluid 4 at an input opening into a capillary 34. The capillary 34 defines the fluid path 6 for the flow of the fluid 4. Sample particles 2 are already distributed in the sample fluid 4 when it enters the input opening of the capillary 34, such that sample particles 2 in the sample fluid 4 entering the capillary 34 have an initial concentration. The concentration preferably relates to the number of sample particles 2 per unit volume. The initial concentration is preferably less than 10^10 particles per ml. The sample particles 2 are preferably protein crystals.

The X-ray source 18 of the system 1 is configured to generate a set of X-ray pulses. The set of X-ray pulses may also be referred to as an X-ray set. If sample particles 2 are exposed to an X-ray set, the corresponding X-ray pulses will intersect the sample particles 2 resulting in a modified X-ray set, which can be detected by the X-ray detector 22. As a result of, the X-ray radiation detected by the X-ray detector 22 preferably represents the structural information of the particles 2 in the diffraction pattern of the detected X-ray radiation.

The sample particles 2 exposed to X-ray radiation are usually destroyed, such that the measurement of the X-ray radiation theoretically must be carried out repeatedly, each time with a fresh sample particle 2. However, the duty cycle of the X-ray sets generated by the X-ray source 18 is usually low. Therefore, it is desired to transport a higher quantity of sample particles 2 within a small volume through a detection section 16, where the X-ray pulses of an X-ray set are emitted in order to detect X-ray radiation formed by a modified X-ray set, such that the detected X-ray radiation represents as much information as possible regarding the structure of the particles 2.

Against this background, it has been found to be of advantage, if the system 1 comprises the first laser light source 10, which is configured to generate the first laser light. Two separate first light guides 38 extend from the first laser light source 10 to opposite points on the outside of the capillary 34, wherein each of the first light guides 38 is configured to guide the first laser light generated by the first laser light source 10 into a first application section 8 defined by the capillary 34. The first application section 8 forms a part of the fluid path 6, which is also defined by the capillary 34. The first light guides 38 may form parts of the first laser light source 10. Further, the first light guides 38 may be formed by light fibers.

When the pump 42 pumps the sample fluid 4, in which the particles 2 are distributed, into the capillary 34 in a transport direction Y, the fluid 4 carrying the particles 2 will enter the first application section 8. The system 1 is configured to carry out step b) of the method and thus to expose the sample fluid 4 flowing through the first application section 8 of the fluid path 6 to the first laser light generated by the first laser light source 10 for a first holding time period such that a first optical light pressure is applied on the sample particles 2 entering the first application section 8 resulting in a bunch 12 of sample particles 2. As a result, the first laser light forms and holds the bunch 12 of particles 12 within the first application section 8. Since the first laser light is emitted to the first application section 8 in step b) only during the first holding time period, the first laser light is turned off at the end of the first holding time period. Therefore, the bunch 12 of sample particles 2 is released at the end of the first holding time period. The flow of the sample fluid 4 generated by the pump 42 will catch the bunch 12 of particles 2 formed in the first application section 8 and will transport this bunch 12 in transport direction Y.

As schematically illustrated in figure 1, the particles 2 in the bunch 12 are arranged with a higher concentration as compared to the initial concentration of a particles 2 in the fluid 4 entering the capillary 34. In principle, the bunch 12 of particles 2 could be transported via the fluid flow into the detection section 16, where the bunch 12 of sample particles 2 could be exposed to the X-ray set of at least one X-ray pulse. The increased concentration of the sample particles 2 in each bunch 12 has the effect, that the X-ray pulses generated for each X-ray set can be used more efficiently. Consequently, the generation of structural information about the particles is also more time efficient.

To increase the efficiency of the system 1 even further and in order to generate as much structural information as possible about the sample particles 2, the system 1 is configured to repeat step b) according to step c) of the method. Therefore, step b) is repeated according to step c) such that the fluid flow of the sample fluid 4 leaving the first application section 8 carries a first sequence 14 of spaced bunches 12 of the sample particles 2. The spaced bunches 12 are preferably understood to be spaced in time and/or being spaced from bunch 12 to bunch 12, such that a distance Z is formed from one bunch 12 to the next bunch 12 in the first sequence 14 of spaced bunches 12.

It is preferred that each bunch 12 is exposed to a separate X-ray set of at least one X-ray pulse in the detection section 16. For this purpose, the system 1 is configured to perform the steps d) and e) of the method. According to step d), the fluid 4 flowing through the detection section 16 of the fluid path 6 downstream to the first application section 8 is exposed to an X-ray set of at least one X-ray pulse generated by the X-ray source 18. Preferably, each X-ray set is formed by a plurality of X-ray pulses, for instance by a number between 500 X-ray pulses and 4000 X-ray pulses. The X-ray pulses are spaced in time. Step d) is repeated according to step e) of the method to form a second sequence of time spaced X-ray sets such that each of the time spaced X-ray sets partly or fully intersects a different bunch 12 of the bunches 12 of sample particles 2 carried by the fluid 4 flowing through the detection section 16. The X-ray pulses of each X-ray set may be generated with a rate of 3500 pulses per second.

In principle, the first sequence 14 of bunches 12 may be transported by the sample fluid 4 in transport direction Y, such that the bunches 12 of the first sequence 14 are sequentially entering the detection section 16. The first laser light source 10 is preferably controlled by a control unit 24 such that the first sequence 14 of the spaced bunches 12 is synchronized to the second sequence of spaced X-ray sets generated by the X-ray source 18. As a result, each of the bunches 12 of the first sequence 14 may be exposed to a separate X-ray set of X-ray pulses generated by the X-ray source 18.

However, it has been found to be of advantage, if the system 1 further comprises a second laser light source 28, which is configured to generate a second laser light. Two second light guides 40 are extending from the second laser light source 28 to opposite points on the outside of the capillary 34, such that the second laser light is transmitted from the second laser light source 28 from opposite directions into a second application section 26 of the fluid path 6. The second application section 26 is arranged downstream to the first application section 8.

As can be derived from figure 1, the fluid flow leaving of their first application section 8 flows downstream into the second application section 26 of the fluid path 6 and thereafter downstream into the detection section 16 of the fluid path 6. The technical effect of the use of the second laser light source 28 is to further concentrate the sample particles 2 in each of the bunches 12 of the first sequence 14 resulting in a third sequence 20 of the bunches 32 of sample particles 2. The particles 2 in each bunch 32 of the third sequence 20 have a higher concentration as compared to the concentration of the particles in each bunch 12 of the first sequence.

To gain the higher concentration of sample particles 2 in the bunches 32, the system 1 is preferably configured to perform the steps g) and h) of the method. According to step g), the sample fluid 4 flowing through the second application section 26 is exposed to the second laser light generated by a second laser light source 28 for a second holding time period such that a second optical light pressure is applied on the sample particles 2 of a bunch 12 of sample particles 2 entering the second application section 26 resulting in a higher density of the sample particles 2 of the respective bunch 32, which is released at the end of the second holding time period. Therefore, a bunch 12 of the first sequence 14 entering the second application section 26 is subject to a further concentration of the corresponding sample particles 2 resulting in a bunch 32 of the third sequence 20. Since the second laser light is emitted to the second application section 26 in step g) only during the second holding time period, the second laser light is turned off at the end of the second holding time period. Therefore, the bunch 32 of sample particles 2 is released at the end of the second holding time period. The flow of the sample fluid 4 generated by the pump 42 will catch the bunch 32 of particles 2 further concentrated in the second application section 26 and will transport this bunch 32 in transport direction Y.

As schematically illustrated in figure 1, the particles 2 in the bunch 32 are arranged with a higher concentration as compared to the concentration of a particles 2 of the bunch 12. The higher concentration of the particles 2 in the bunch 32 allow a higher efficiency during examination of the particles 2 of the bunch 32 with X-rays.

Step d) is synchronously repeated according to step h), such that the flow of the sample fluid 4 leaving the second application section 26 carries the third sequence 20 of spaced bunches 32 of densified sample particles. Therefore, the third sequence 20 may correspond to the first sequence 14 but with the difference, that the particles 2 in the bunches 32 of the third sequence 20 are arranged with a higher concentration per unit volume.

When a bunch 32 of the third sequence 20 enters the detection section 16, where preferably at least a part of the examination of the particles 2 takes place, the bunch 32 of particles 2 will be exposed to an X-ray set of X-ray pulses. Since the concentration of particles is considerably increased in the bunch 32, there is a high chance that each or a large proportion of the X-ray pulses of the X-ray set are modified resulting in the modified X-ray set detected by the X-ray detector 22. Consequently, the X-ray radiation detected by the X-ray detector 22 can advantageously be used for generating a structural information about the sample particles 2.

Since the pump 42 preferably pumps of the fluid 4 continuously into the capillary 34, a flowrate of the fluid flow may be between 10 µl/minute and 0.16 µl/s. Preferably, up to 1.6 million particles 2 per second may flow into the capillary 34. The flow of sample fluid 4 continuously transports the sample particles 2 and the bunches 12,32 in the transported direction Y through of the capillary 34. As a result, bunches 12 of the first sequence 14 are sequentially entering the second application section 26 and bunches 32 of the third sequence 20 are sequentially entering the detection section 16. In order to reach a high efficiency of the system 1, it is preferred that the first laser light source 10 and the second laser light source 28 are controlled by the control unit 24 such that the third sequence 20 of spaced bunches 32 is synchronized to the first sequence 14 of spaced bunches 12, or vice versa, and such that both sequences 14, 20 are synchronized to the second sequence of spaced X-ray sets generated according to step e) of the method.

The synchronization of the sequences 14, 20 has the effect, that the bunches 12 are not newly formed in the second application section 24, but instead, when a bunch 12 of the first sequence 14 is entering the second application section 26, the particles 2 of this bunch 12 are exposed to the second laser light during the whole second holding time period resulting in the desired higher concentration of the particles 2 of the bunch 12, forming the bunch 32 of the third sequence 20 when released.

The synchronization of the third sequence 20 of bunches 32 with the second sequence of X-ray sets has the effect, that each of the bunches 32 entering the detection section 16 at a time period, when the X-ray pulses of an X-ray set are emitted into the detection section 16, is exposed to the X-ray pulses of this X-ray set. This further increases the efficiency of the examination of the sample particles 2 and therefore the efficiency of the system 1.

For supporting the synchronization, it has been found to be of advantage, if the frequency of repeating step b), the frequency of repeating step d) and preferably also the frequency of repeating step g) match with each other. Thus, the frequencies are preferably equal, but may be time and/or phase shifted. This preferably holds true irrespective of the flow speed of the fluid 4 delivering the particles and/or bunches. A distance Z between two subsequent bunches 12, 32 of the first and/or second sequence 14, 20 may be equal to the speed of the fluid 4 divided by the frequency explained before. When using several application sections 8, 26 in series for applying laser light, every corresponding laser light source 10, 28 may be operated at the same frequency to repeat steps b) and g), respectively, but the phase shift and/or time shift between the frequencies may be adjusted according to distance D between the application sections 8, 26 and the speed of the fluid 4. This may ensure that all bunches 12, 32 are released in accordance with a desired cycle time.

In other words, the underlaying idea of the "catch and release" approach of the method will locally concentrate particles 2 into bunches 12, 32 that are spaced in time to match the arrive times of X-ray pulses, and the timing of the bunches 12, 32 (set by activating the optical laser light) is synchronized with the X-ray pulses. In this way the initial concentration of particles 2 can be reduced, which reduces the number of particles 2 that have to be prepared for the examination. This saves time and costs and reduces the chances for clogging, which also saves time by avoiding interruptions to the method.

In order to synchronize the first sequence 14 with the second sequence and optionally also with the third sequence 20, the system 1 may comprise a measurement unit (not shown), which is configured to measure the concentration of the particles 2 in the fluid 4 flowing through the first and/or second application section 8, 26. The measurement unit may be configured to detect light scattering in the first and/or second application section 8, 26 and further configured to measure the concentration based on the detected light scattering. Alternatively or additionally, the measurement of the concentration of particles 2 may be inferred from the detected X-ray radiation and/or from diffraction pattern, which are represented by the detected X-ray radiation.

Each of the first and second laser light source 10, 28 is preferably a pulsed laser light source, which is preferably configured to generate pulsed laser light as the laser light which is exposed to the particles in the fluid 4 in the first or second application section 8, 26 of the fluid path 6, respectively. For instance, each of the first and second laser light may be generated to have a wavelength of 970 nm and/or a power of 0,9 W.

It is to be noted, that even though the system 1 is schematically illustrated in figure 1 with a first laser light source 10 and a second laser light source 28, the system 1 may comprise a larger number of laser light sources and a larger number of corresponding application sections in the fluid path 6, such that the concentration of the particles 2 in a bunch 12, 32 is increased in each application section 8, 26 by means of the laser light.

A higher speed fluid flow may create a higher drag force on the particles 2, that then requires a higher laser light intensity of the first and/or second laser light to counteract. To avoid excessive light intensities, the speed of the fluid flow is preferably less than 1 mm/s.

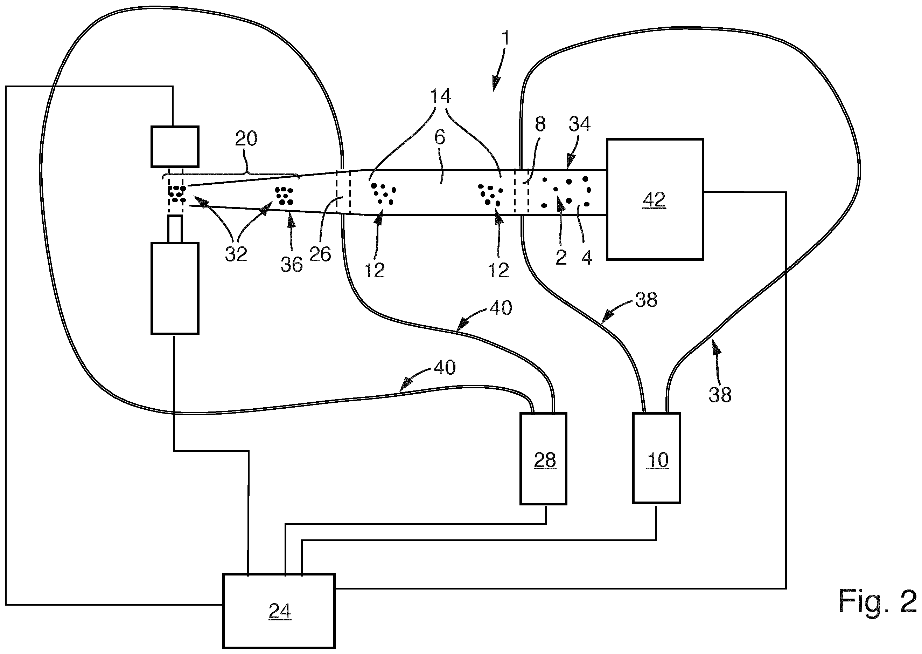

Fig. 2 schematically illustrates a second embodiment of the system 1, which is equal to the system 1 as shown in Fig. 1 except for the end section of the capillary 34, which is formed by a nozzle 36, which is configured to release the flow of sample fluid 4 as a fluid jet, and wherein the X-ray source 18 is arranged such that the X-ray set of the at least one X-ray pulse generated in step d) is exposed to the fluid jet.

The velocity of particles 2 in the fluid flow of a capillary 34 may not be uniform, but may depend on the position of the particles 2 in the cross-sectional area of the capillary 34. For example, for cylindrical capillaries 34, the flow speed has a parabolic dependence on radial position, with zero velocity exactly at the capillary wall and highest in the center. Thus, when releasing a bunch 12, 32 of particles 2 from an application section 8, 26, the particles 2 in the bunch 12, 32 may disperse unless they are all in the same cross-sectional position. Therefore, the first and/or second laser light is emitted into the first and/or second application section 8, 26, respectively, such that the laser light pushes the particle 2 to a common cross-sectional position of the bunch 12, 32. However, dispersion can also be minimized by integrating the first and/or second application section 8, 26 into the nozzle 36 that creates the jet stream. In Fig. 2, the second application section 26 is exemplarily integrated into the nozzle 36, which forms the end-section of the capillary 34. However, the nozzle 36 may alternatively be a separate part. The nozzle 36 may minimize the time from concentrating the particles 2 of a bunch 12, 32 to the time the particles 2 are exposed to the X-ray pulses of an X-ray set in the detection section 16. In another embodiment, particles 2 may be brought to a center-line of the fluid capillary using flow-focusing of another fluid.

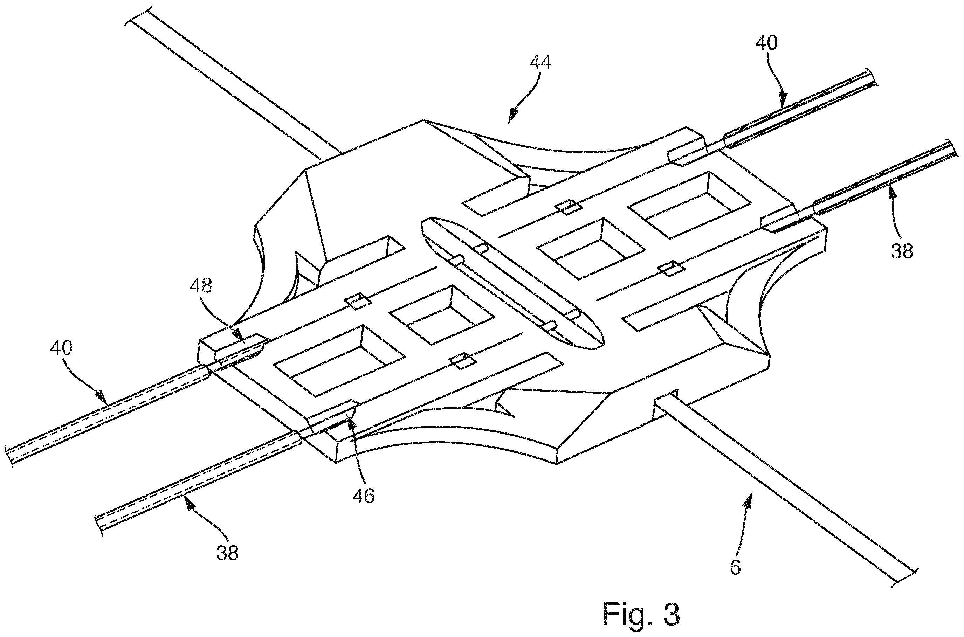

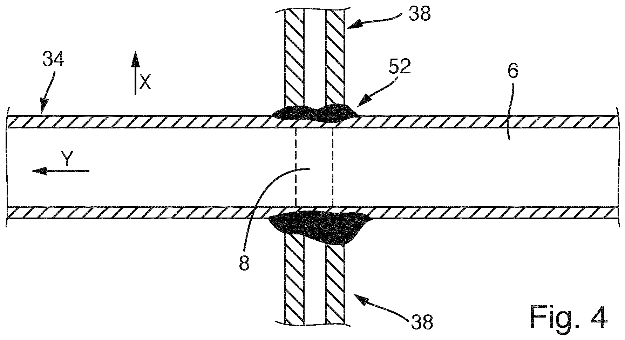

Fig. 3 schematically illustrates a part of a further preferred embodiment of the system 1. According to this embodiment, parts of the system 1 may be integrated into a single microchip 44, as schematically shown in Fig. 4. The microchip 44 may be a glass-microchip 44. For example, at least a part of the first laser light guide 38 may be formed by the microchip 44. The same applies for the second laser light guide 40, which may be at least partly formed by the microchip 44, too. Further, each of the first and second laser light guides 38, 40 may be replaced by 3D waveguides, which may be formed by the microchip 44. At least a part of the capillary 34 may also be formed by the microchip 44. In an example, the whole capillary 34 is formed by the microchip 44. All parts of the microchip 44 can be fabricated by Femtosecond laser induced chemical etching (FLICE) simultaneously.

The 3D patterning capability of FLICE enables locally varying cross section of the fluid path 6 and hence flow speed modulation and the efficiency of concentrating particles 2 in the first and/or second application section 8, 26. A monolithic integration of waveguides in a glass device (in particular the microchip 44) allows the implementation of extremely high density of waveguides along the light guides including those for sensing.

Fig. 4 schematically illustrates a part of a preferred embodiment of the capillary 34. As it can be derived from Fig. 4, the capillary 34 defines the fluid path 6, which comprises the first application section 8, into which the first laser light is emitted. For this purpose, each of the two separate first light guides 38 extend to opposite points at the outside of the capillary 34, such that the first laser light is transmitted through the wall of the capillary and emitted into the first application section 8, preferably in a cross direction X perpendicular to the transport direction Y. Each end of the two first light emitting guide 38 may be attached with a matching gel 52 to the outside of the capillary 34.

It is additionally pointed out that "comprising" does not rule out other elements, and "a" or "an" does not rule out a multiplicity.

Reference signs in the claims are not to be regarded as restrictive.

### REFERENCE SIGNS

- D: distance between application sections
- Z: distance between bunches
- Y: transport direction
- X: cross direction

- 1: system
- 2: particle
- 4: fluid
- 6: fluid path
- 8: first application section
- 10: first laser light source
- 12: bunch
- 14: first sequence
- 16: detection section
- 18: X-ray source
- 20: second sequence
- 22: X-ray detector
- 24: control unit
- 26: second application section
- 28: second laser light source
- 32: bunch
- 34: capillary
- 36: nozzle
- 38: first laser light guide
- 40: second laser light guide
- 42: pump
- 44: microchip
- 46: first light guiding channel
- 48: second light guiding channel
- 50: fluid channel
- 52: matching gel

## Claims

1. Method for examining sample particles (2) by X-ray radiation, comprising the steps:
a) Generating a flow of a sample fluid (4) along a fluid path (6) in a transport direction Y, wherein sample particles (2) are distributed in the sample fluid (4);
b) Exposing the sample fluid (4) flowing through a first application section (8) of the fluid path (6) to a first laser light generated by a first laser light source (10) for a first holding time period such that a first optical light pressure is applied on sample particles (2) entering the first application section (8) resulting in a bunch (12) of sample particles (2), which is released at the end of the first holding time period;
c) Repeating step b) such that the fluid flow of the sample fluid (4) leaving the first application section (8) carries a first sequence (14) of spaced bunches (12) of sample particles (2);
d) Exposing the sample fluid (4) flowing through a detection section (16) of the fluid path (6) downstream to the first application section (8) to an X-ray set of at least one X-ray pulse generated by an X-ray source (18);
e) Repeating step d) to form a second sequence of spaced X-ray sets such that each of the spaced X-ray sets partly or fully intersects a different bunch (12, 32) of the bunches (12, 32) of sample particles (2) carried by the sample fluid (4) flowing through the detection section (16); and
f) Detecting by means of an X-ray detector (22) an X-ray radiation formed by the X-ray pulses of the second sequence of spaced X-ray sets modified by the bunches (12,32) of sample particles (2) in step e).

2. Method according to the preceding claim, **characterized in that** the first laser light is configured to concentrate the sample particles (2) of a bunch (12) in the transport direction Y and/or in a cross direction X being perpendicular to the transport direction Y.

3. Method according to any of the preceding claims, **characterized in that** the X-ray source (18) and/or the first laser light source (10) is/are controlled by a control unit (24) such that the first sequence (14) of spaced bunches (12) resulting from step c) is synchronized to the second sequence of spaced X-ray sets resulting from step e).

4. Method according to the preceding claim, **characterized in that** step b) is repeated according to step c) with the same cycle frequency as step d) is repeated according to step e).

5. Method according to the preceding claim, **characterized in that** the first holding periods are spaced in time such that each bunch (12) of sample particles (2) is fully or at least partly intersected by the X-ray set repeatedly generated according to step e).

6. Method according to any of the preceding claims, **characterized in that** a frequency of repeating step d) according to step e) is between 5 and 20 per second, preferably 10 per second.

7. Method according to any of the preceding claims, **characterized in that** an initial concentration of sample particles (2) in the sample fluid (4) entering the first application section (8) is less than 10¹⁰ particles per ml of the sample fluid (4).

8. Method according to the preceding claim, **characterized in that** the first laser light is configured such that a first concentration of the sample particles (2) of each bunch (12) in the sample fluid (4) leaving the first application section (8) is at least 20 times higher than the initial concentration.

9. Method according to any of the preceding claims, **characterized in that** the fluid leaving the first application section (8) flows downstream into a second application section (26) of the fluid path (6) and thereafter downstream into the detection section (16) of the fluid path (6), wherein the method comprises the following further steps g) and h), which are performed between step c) and d):
g) Exposing the sample fluid (4) flowing through the second application section (26) to a second laser light generated by a second laser light source (28) for a second holding time period such that a second optical light pressure is applied on the sample particles (2) of a bunch (12) of sample particles (2) entering the second application section (26) resulting in a higher density of the sample particles (2) of the respective bunch (32), which is released at the end of the second holding time period; and
h) Synchronously repeating step g) in accordance with step c) such that the flow of the sample fluid (4) leaving the second application section (26) carries a third sequence (20) of spaced bunches (32) of densified sample particles (2).

10. Method according to the preceding claim, **characterized in that** the first laser light source (10) and/or the second laser light source (28) is/are controlled by the control unit (24) such that the third sequence (20) of spaced bunches (32) resulting from step h) is synchronized to the first sequence (14) of spaced bunches (12) resulting from step e).

11. Method according to any of the preceding claims 9 to 10, **characterized in that** the second laser light is configured such that a second concentration of the sample particles (2) of each bunch (32) in the sample fluid (4) leaving the second application section (26) is at least 50 times higher than the first concentration.

12. Method according to any of the preceding claims, **characterized in that** the X-ray detector (22) is configured such that the detected X-ray radiation represents diffraction pattern of sample particles (2) of the bunches (12, 32), which modified the at least one X-ray pulse of the respective X-ray set.

13. Method according to any of the preceding claims, **characterized in that** the method comprises the following further steps i) and j):
i) Exposing the sample fluid (4) flowing through a third application section of the fluid path (6) to a reference acoustic wave generated by an acoustic wave generator for a third holding time period such that an acoustic pressure, which results in a further concentration of a bunch of sample particles or in a pre-bunch of sample particles entering the third application section; and
j) Synchronously repeating step i) in accordance with step c).

14. System (1) for detecting X-ray radiation, comprises a first laser light source (10), an X-ray source (18), an X-ray detector (22) and preferably a second laser light source (28) and preferably a control unit (24), wherein the system (1) is configured to carry out the method according to any of the preceding claims.

15. System (1) according to the preceding claim, **characterized in that** the system (1) comprises a hollow capillary (34), which is configured to guide the sample fluid (4) along the fluid pathway (6) in the transport direction Y, and wherein the capillary (34) is configured to transmit the first laser light at least through a first ring section of the capillary (34) forming the first application section (8) of the fluid pathway (6).

16. System (1) according to any of the preceding claims 14 to 15, **characterized in that** the capillary (34) ends in a nozzle (36), which is configured to release the flow of sample fluid (4) as a fluid jet, and wherein the X-ray source (18) is arranged such that the X-ray set of the at least one X-ray pulse generated in step d) is exposed to the fluid jet.

## Patentansprüche

1. Verfahren zur Untersuchung von Probenteilchen (2) durch Röntgenstrahlung, dass die folgenden Schritte umfasst:
a) Erzeugen einer Strömung eines Probenfluids (4) entlang eines Fluidweges (6) in einer Transportrichtung Y, wobei Probenteilchen (2) in dem Probenfluid (4) verteilt sind;
b) Aussetzen des Probenfluids (4), das durch einen ersten Applikationsabschnitt (8) des Fluidweges (6) fließt, einem ersten Laserlicht, das von einer ersten Laserlichtquelle (10) erzeugt wird, für eine erste Haltezeitdauer, so dass ein erster optischer Lichtdruck auf Probenteilchen (2) ausgeübt wird, die in den ersten Applikationsabschnitt (8) eintreten, was zu einem Bündel (12) von Probenteilchen (2) führt, das am Ende der ersten Haltezeitdauer freigegeben wird;
c) Wiederholung von Schritt b), so dass der Fluidstrom des Probenfluids (4), das den ersten Applikationsabschnitt (8) verlässt, eine erste Folge (14) von beabstandeten Bündeln (12) von Probenteilchen (2) mit sich führt;
d) Bestrahlung des Probenfluids (4), das durch einen Detektionsabschnitt (16) des Fluidweges (6) stromabwärts des ersten Applikationsabschnittes (8) fließt, mit einem Röntgenstrahlensatz aus mindestens einem Röntgenimpuls, der von einer Röntgenquelle (18) erzeugt wird;
e) Wiederholen von Schritt d), um eine zweite Folge von beabstandeten Röntgenstrahlensätzen zu bilden, so dass jeder der beabstandeten Röntgenstrahlensätze ein anderes Bündel (12, 32) der Bündel (12,32) von Probenteilchen (2), die von dem durch den Detektionsabschnitt (16) strömenden Probenfluid (4) getragen werden, teilweise oder vollständig schneidet; und
f) Detektieren einer Röntgenstrahlung mittels eines Röntgendetektors (22), die durch die Röntgenimpulse der zweiten Folge von beabstandeten Röntgenstrahlensätzen gebildet wird, die durch die Bündel (12, 32) von Probenteilchen (2) in Schritt e) modifiziert wurden.

2. Verfahren nach dem vorhergehenden Anspruch, **dadurch gekennzeichnet, dass** das erste Laserlicht so konfiguriert ist, dass es die Probenteilchen (2) eines Bündels (12) in der Transportrichtung Y und/oder in einer Querrichtung X, die senkrecht zur Transportrichtung Y steht, konzentriert.

3. Verfahren nach einem der vorhergehenden Ansprüche, **dadurch gekennzeichnet, dass** die Röntgenquelle (18) und/oder die erste Laserlichtquelle (10) von einer Steuereinheit (24) so gesteuert wird/werden, dass die aus Schritt c) resultierende erste Folge (14) von beabstandeten Bündeln (12) mit der aus Schritt e) resultierenden zweiten Folge von beabstandeten Röntgensätzen synchronisiert wird.

4. Verfahren nach dem vorhergehenden Anspruch, **dadurch gekennzeichnet, dass** Schritt b) nach Schritt c) mit der gleichen Zyklusfrequenz wiederholt wird wie Schritt d) nach Schritt e) wiederholt wird.

5. Verfahren nach dem vorhergehenden Anspruch, **dadurch gekennzeichnet, dass** die ersten Halteperioden zeitlich so beabstandet sind, dass jedes Bündel (12) von Probenteilchen (2) vollständig oder zumindest teilweise von dem gemäß Schritt e) wiederholt erzeugten Röntgenstrahlensatz geschnitten wird.

6. Verfahren nach einem der vorhergehenden Ansprüche, **dadurch gekennzeichnet, dass** die Häufigkeit der Wiederholung von Schritt d) nach Schritt e) zwischen 5 und 20 pro Sekunde, vorzugsweise 10 pro Sekunde, liegt.

7. Verfahren nach einem der vorhergehenden Ansprüche, **dadurch gekennzeichnet, dass** eine Anfangskonzentration von Probenteilchen (2) in dem Probenfluid (4), die in den ersten Applikationsabschnitt (8) gelangt, weniger als 10¹⁰ Partikel pro ml des Probenfluids (4) beträgt.

8. Verfahren nach dem vorhergehenden Anspruch, **dadurch gekennzeichnet, dass** das erste Laserlicht so konfiguriert ist, dass eine erste Konzentration der Probenteilchen (2) jedes Bündels (12) in dem die erste Applikationsstrecke (8) verlassenden Probenfluid (4) mindestens 20-mal höher ist als die Ausgangskonzentration.

9. Verfahren nach einem der vorhergehenden Ansprüche, **dadurch gekennzeichnet, dass** das aus dem ersten Applikationsabschnitt (8) austretende Fluid stromabwärts in einen zweiten Applikationsabschnitt (26) des Fluidweges (6) und danach stromabwärts in den Detektionsabschnitt (16) des Fluidweges (6) fließt, wobei das Verfahren die folgenden weiteren Schritte g) und h) umfasst, die zwischen Schritt c) und d) durchgeführt werden:
g) Aussetzen des durch den zweiten Applikationsabschnitt (26) fließenden Probenfluids (4) einem zweiten Laserlicht, das von einer zweiten Laserlichtquelle (28) erzeugt wird, für eine zweite Haltezeitperiode, so dass ein zweiter optischer Lichtdruck auf die Probenteilchen (2) eines Bündels (12) von Probenteilchen (2), die in den zweiten Applikationsabschnitt (26) eintreten, ausgeübt wird, was zu einer höheren Dichte der Probenteilchen (2) des jeweiligen Bündels (32) führt, die am Ende der zweiten Haltezeitperiode freigegeben wird; und
h) Synchrones Wiederholen von Schritt g) in Übereinstimmung mit Schritt c), so dass der Strom des Probenfluids (4), der den zweiten Applikationsabschnitt (26) verlässt, eine dritte Folge (20) von beabstandeten Bündeln (32) von verdichteten Probenteilchen (2) mit sich führt.

10. Verfahren nach dem vorhergehenden Anspruch, **dadurch gekennzeichnet, dass** die erste Laserlichtquelle (10) und/oder die zweite Laserlichtquelle (28) von der Steuereinheit (24) derart gesteuert wird/werden, dass die aus Schritt h) resultierende dritte Folge (20) von beabstandeten Bündeln (32) mit der aus Schritt e) resultierenden ersten Folge (14) von beabstandeten Bündeln (12) synchronisiert wird.

11. Verfahren nach einem der vorhergehenden Ansprüche 9 bis 10, **dadurch gekennzeichnet, dass** das zweite Laserlicht so konfiguriert wird, dass eine zweite Konzentration der Probenteilchen (2) jedes Bündels (32) in dem Probenfluid (4), die den zweiten Applikationsabschnitt (26) verlässt, mindestens 50 mal höher ist als die erste Konzentration.

12. Verfahren nach einem der vorhergehenden Ansprüche, **dadurch gekennzeichnet, dass** der Röntgendetektor (22) so konfiguriert ist, dass die detektierte Röntgenstrahlung das Beugungsmuster von Probenteilchen (2) der Bündel (12, 32) darstellt, die den mindestens einen Röntgenimpuls des jeweiligen Röntgensatzes modifiziert haben.

13. Verfahren nach einem der vorhergehenden Ansprüche, **dadurch gekennzeichnet, dass** das Verfahren die folgenden weiteren Schritte i) und j) umfasst:
i) Aussetzen des Probenfluids (4), das durch einen dritten Applikationsabschnitt des Fluidweges (6) fließt, einer akustischen Referenzwelle, die von einem Schallwellengenerator für eine dritte Haltezeitperiode erzeugt wird, so dass ein akustischer Druck, der zu einer weiteren Konzentration eines Bündels von Probenteilchen oder eines Vorbündels von Probenteilchen führt, in den dritten Applikationsabschnitt eintritt; und
j) Synchrone Wiederholung von Schritt i) in Übereinstimmung mit Schritt c).

14. System (1) zur Detektion von Röntgenstrahlung, umfassend eine erste Laserlichtquelle (10), eine Röntgenquelle (18), einen Röntgendetektor (22) und vorzugsweise eine zweite Laserlichtquelle (28) und vorzugsweise eine Steuereinheit (24), wobei das System (1) zur Durchführung des Verfahrens nach einem der vorhergehenden Ansprüche konfiguriert ist.

15. System (1) nach dem vorhergehenden Anspruch, **dadurch gekennzeichnet, dass** das System (1) eine hohle Kapillare (34) umfasst, die so konfiguriert ist, dass sie das Probenfluid (4) entlang des Fluidweges (6) in der Transportrichtung Y führt, und wobei die Kapillare (34) so konfiguriert ist, dass sie das erste Laserlicht zumindest durch einen ersten Ringabschnitt der Kapillare (34), der den ersten Applikationsabschnitt (8) des Fluidweges (6) bildet, überträgt.

16. System (1) nach einem der vorhergehenden Ansprüche 14 bis 15, **dadurch gekennzeichnet, dass** die Kapillare (34) in einer Düse (36) endet, die so ausgebildet ist, dass sie den Strom des Probenfluids (4) als Fluidstrahl freigibt, und wobei die Röntgenquelle (18) so angeordnet ist, dass der Röntgenstrahlensatz des in Schritt d) erzeugten mindestens einen Röntgenimpulses dem Fluidstrahl ausgesetzt wird.

## Revendications

1. Procédé d'examen de particules d'échantillon (2) par rayons X, comprenant les étapes suivantes :
a) génération d'un écoulement de fluide de l'échantillon (4) selon un chemin de fluide (6) dans une direction de transport Y, dans lequel les particules d'échantillon (2) sont distribuées dans le fluide de l'échantillon (4) ;
b) exposition du fluide de l'échantillon (4) qui s'écoule à travers une première section d'application (8) du chemin de fluide (6) à une première lumière laser générée par une première source de lumière laser (10) pendant une première période de rétention, de telle sorte qu'une première pression de lumière optique est appliquée sur des particules d'échantillon (2) entrant dans la première section d'application (8), ce qui résulte en un paquet (12) de particules d'échantillon (2) qui est libéré à la fin de la première période de rétention ;
c) répétition de l'étape b) de telle sorte que l'écoulement du fluide de l'échantillon (4) qui sort de la première section d'application (8) transporte une première séquence (14) de paquets espacés (12) de particules d'échantillon (2) ;
d) exposition du fluide de l'échantillon (4) circulant à travers une section de détection (16) du chemin de fluide (6) en aval de la première section d'application (8) à un ensemble de rayons X d'au moins une impulsion de rayons X générée par un source de rayons X (18) ;
e) répétition de l'étape d) pour former une deuxième séquence d'ensembles de rayons X espacés de telle sorte que chacun des ensembles de rayons X espacés coupe partiellement ou entièrement un paquet différent (12, 32) desdits paquets (12,32) de particules d'échantillon (2) transportées par le fluide de l'échantillon (4) circulant à travers la section de détection (16) ; et
f) détection au moyen d'un détecteur de rayons X (22) d'un rayonnement de rayons X formé par les impulsions de rayons X de la deuxième séquence d'ensembles de rayons X espacés modifiés par les paquets (12, 32) de particules d'échantillon (2) à l'étape e).

2. Procédé selon la revendication précédente, **caractérisé en ce que** la première lumière laser est configurée pour concentrer les particules d'échantillon (2) d'un paquet (12) dans la direction de transport Y et/ou dans une direction transversale X perpendiculaire à la direction de transport Y.

3. Procédé selon l'une quelconque des revendications précédentes, **caractérisé en ce que** la source de rayons X (18) et/ou la première source de lumière laser (10) sont commandées par une unité de commande (24) de telle sorte que la première séquence (14) de paquets espacés (12) résultant de l'étape c) est synchronisée avec la deuxième séquence d'ensembles de rayons X espacés résultant de l'étape e).

4. Procédé selon la revendication précédente, **caractérisé en ce que** l'étape b) est répétée selon l'étape c) avec la même fréquence de cycle que l'étape d) est répétée selon l'étape e).

5. Procédé selon la revendication précédente, **caractérisé en ce que** les premières périodes de maintien sont espacées dans le temps de telle sorte que chaque paquet (12) de particules d'échantillon (2) est entièrement ou au moins partiellement recoupé par l'ensemble de rayons X généré de manière répétée selon l'étape e).

6. Procédé selon l'une quelconque des revendications précédentes, **caractérisé en ce qu'**une fréquence de répétition de l'étape d) selon l'étape e) est comprise entre 5 et 20 fois par seconde, et est de préférence de 10 fois par seconde.

7. Procédé selon l'une quelconque des revendications précédentes, **caractérisé en ce qu'**une concentration initiale de particules d'échantillon (2) dans le fluide échantillon (4) entrant dans la première section d'application (8) est inférieure à 10¹⁰ particules par ml du fluide de l'échantillon (4).

8. Procédé selon la revendication précédente, **caractérisé en ce que** la première lumière laser est configurée de telle sorte qu'une première concentration des particules d'échantillon (2) de chaque paquet (12) dans le fluide de l'échantillon (4) sortant de la première section d'application (8) est au moins 20 fois supérieure à la concentration initiale.

9. Procédé selon l'une quelconque des revendications précédentes, **caractérisé en ce que** le fluide sortant de la première section d'application (8) s'écoule vers l'aval dans une deuxième section d'application (26) du chemin de fluide (6) et ensuite vers l'aval dans la section de détection (16) du chemin de fluide (6), dans lequel le procédé comprend les étapes additionnelles suivantes g) et h), qui sont mises en oeuvre entre les étapes c) et d) :
g) exposition du fluide de l'échantillon (4) circulant à travers la deuxième section d'application (26) à une deuxième lumière laser générée par une deuxième source de lumière laser (28) pendant une deuxième période de rétention de telle sorte qu'une deuxième pression de lumière optique est appliquée sur les particules d'échantillon (2) d'un paquet (12) de particules d'échantillon (2) entrant dans la deuxième section d'application (26), ce qui résulte en une densité plus élevée des particules d'échantillon (2) du paquet respectif (32) qui sont libérées à la fin de la deuxième période de rétention ; et
h) répétition synchrone de l'étape g) conformément à l'étape c) de telle sorte que l'écoulement du fluide de l'échantillon (4) sortant de la deuxième section d'application (26) transporte une troisième séquence (20) de paquets espacés (32) de particules d'échantillon densifiées (2).

10. Procédé selon la revendication précédente, **caractérisé en ce que** la première source de lumière laser (10) et/ou la deuxième source de lumière laser (28) sont commandées par l'unité de commande (24) de telle sorte que la troisième séquence (20) de paquets espacés (32) résultant de l'étape h) est synchronisée avec la première séquence (14) de paquets espacés (12) résultant de l'étape e).

11. Procédé selon l'une quelconque des revendications précédentes 9 et 10, **caractérisé en ce que** la deuxième lumière laser est configurée de telle sorte qu'une deuxième concentration des particules d'échantillon (2) de chaque paquet (32) dans le fluide de l'échantillon (4) sortant de la deuxième section d'application (26) est au moins 50 fois supérieure à la première concentration.

12. Procédé selon l'une quelconque des revendications précédentes, **caractérisé en ce que** le détecteur de rayons X (22) est configuré de telle sorte que le rayonnement de rayons X détecté représente une figure de diffraction des particules d'échantillon (2) des paquets (12,32) qui a modifié ladite au moins une impulsion de rayons X de l'ensemble de rayons X respectif.

13. Procédé selon l'une quelconque des revendications précédentes, **caractérisé en ce que** le procédé comprend les étapes i) et j) additionnelles suivantes :
i) exposition du fluide de l'échantillon (4) s'écoulant à travers une troisième section d'application du chemin de fluide (6) à une onde acoustique de référence générée par un générateur d'ondes acoustiques pendant une troisième période de rétention de manière à appliquer une pression acoustique qui provoque une concentration additionnelle d'un paquet de particules d'échantillon ou d'un pré-paquet de particules d'échantillon entrant dans la troisième section d'application ; et
j) répétition synchrone de l'étape i) conformément à l'étape c).

14. Système (1) pour détecter un rayonnement de rayons X, comprenant une première source de lumière laser (10), une source de rayons X (18), un détecteur de rayons X (22), de préférence une deuxième source de lumière laser (28), et de préférence une unité de commande (24), dans lequel le système (1) est configuré pour mettre en oeuvre le procédé selon l'une quelconque des revendications précédentes.

15. Système (1) selon la revendication précédente, **caractérisé en ce que** le système (1) comprend un capillaire creux (34) qui est configuré pour guider le fluide de l'échantillon (4) le long du chemin de fluide (6) dans la direction de transport Y, et dans lequel le capillaire (34) est configuré pour transmettre la première lumière laser au moins à travers une première section annulaire du capillaire (34) formant la première section d'application (8) du chemin de fluide (6).

16. Système (1) selon l'une quelconque des revendications précédentes 14 et 15, **caractérisé en ce que** le capillaire (34) se termine par une buse (36) qui est configurée pour libérer le flux de fluide de l'échantillon (4) sous la forme d'un jet de fluide, et dans lequel la source de rayons X (18) est agencée de telle sorte que l'ensemble de rayons X de ladite au moins une impulsion de rayons X générée à l'étape d) est exposé au jet de fluide.
